Europäisches Patentamt

European Patent Office

Office européen des brevets

(19)

(11) Publication number: **0 108 649 B1**

## EUROPEAN PATENT SPECIFICATION

(12)

(45) Date of publication of patent specification: **18.09.91**   (51) Int. Cl.⁵: **D21H 17/22, C08H 1/00**

(21) Application number: **83306806.7**

(22) Date of filing: **08.11.83**

(54) **A process for producing a protein adhesive binder.**

(30) Priority: **08.11.82 US 440111**

(43) Date of publication of application:
**16.05.84 Bulletin 84/20**

(45) Publication of the grant of the patent:
**18.09.91 Bulletin 91/38**

(84) Designated Contracting States:
**BE DE FR GB NL**

(56) References cited:
**DE-A- 2 416 770**
**US-A- 2 862 918**

**CHEMICAL ABSTRACTS, volume 70, no. 5, February 3, 1969, page 1888, abstract 19014z (COLUMBUS, OHIO, US) AOKI HIROSHI et al. "Gelation of soybean proteins. IV. Effects of reducing agents, oxidizing agents, and protein denaturants"**

(73) Proprietor: **RALSTON PURINA COMPANY**
**Checkerboard Square**
**St. Louis Missouri 63164(US)**

(72) Inventor: **Coco, Charles E.**
**333 N. Boyle**
**St. Louis Missouri 63108(US)**
Inventor: **Graham, Paul M.**
**218 Lark Hill Lane**
**Ballwin Missouri 63011(US)**
Inventor: **Krinski, Thomas L.**
**3308 Franklin**
**Granite City Illinois 62040(US)**

(74) Representative: **Tubby, David George et al**
**MARKS & CLERK 57-60 Lincoln's Inn Fields**
**London WC2A 3LS(GB)**

EP 0 108 649 B1

## Description

The present invention relates to a process for producing an adhesive binder from a modified protein, preferably vegetable protein, material.

Vegetable protein materials are well known for use as adhesive binders for pigment-containing coatings that are used for the coating of paper. The pigment-containing coating provides the paper with a desirable finish, particularly gloss and smoothness. The functions of the pigment in the coating are to fill in irregularities in the paper surface and to produce an even and uniformly absorbent surface for printing. The adhesive serves to bind the pigment particles to each other, as well as to the surface of the coating. The selection of a suitable adhesive is, therefore, an important factor in the quality of a coating composition for use on paper.

Vegetable protein materials have been extensively used as adhesive binders for paper coatings and of these materials, the most commonly used are vegetable protein isolates, typically isolated soy protein. Isolated soy protein is produced by treating oil-free soy flakes with an alkaline solution to dissolve the protein, which is then removed from insoluble materials by filtration or centrifugation. The protein is then recovered from the solution by the addition of an acid, which precipitates the protein at its isoelectric point. The precipitated protein is then in an unhydrolysed or generally unmodified state and, after drying, can be dispersed in an alkaline medium to form an adhesive binder for a paper coating composition.

However, unhydrolysed or unmodified soy protein isolates are relatively less desirable as adhesive binders for paper coatings because they have a relatively low solubility in weak alkaline solutions; moreover, such solutions have a high viscosity and are sensitive to heat, tending to form gels at temperature of about 160°F (71°C). Because of these disadvantages, unmodified or unhydrolysed soy protein is usually modified in some way to lower the viscosity of coating compositions containing it and to increase the adhesive strength of the protein when it is dispersed in weak alkaline solutions. Modification or hydrolysis of the protein also generally reduces its sensitivity to heat. Modification of the protein usually consists of hydrolysis or treatment of the protein in an aqueous dispersion with various alkaline reagents under controlled conditions of pH, temperature and time. These conditions result in the dissociation of the native or unmodified protein structure into smaller sub-units, which are more suitable for use as binders in paper coatings.

Another means of modifying the protein is to treat it with various chemical reagents in order to alter the rheological properties of coatings containing it as binder. Generally, the purpose of modifying the protein is to improve the fluidity in alkaline dispersions and also to reduce the viscosity of coating compositions prepared from it.

U.S. Patent Specification No. 2,862,918 describes such a modified protein in which an isolated soy protein, which has been hydrolysed beyond the initial gel stage, is acylated by treatment with a carboxylic acid anhydride, such as acetic anhydride. The acylated protein, when dispersed in an alkaline solution, has a lower viscosity and is suitable as an adhesive binder in pigment-containing coating compositions for use with paper or the like.

Hydrolysis may be carried out prior to or simultaneously with the reaction with the carboxylic anhydride but, in any event, should be sufficient to ensure that the initial gel stage of the protein has been by-passed. Typical hydrolysis times suggested in the patent specification are between 4 and 6 hours.

U.S. Patent Specification No. 2,932,589 describes a paper-coating composition produced by reacting an isolated soy protein with a dicarboxylic acid anhydride, such as phthalic anhydride. A protein acylated in this way, when "cut" without alkali disperses, more readily than does untreated protein and has a lower viscosity than untreated protein. This reduction in the viscosity of the alkaline dispersion enables one to produce a coating composition having a high solids level, with relatively good fluidity for adhesive application to the surface to be coated. The increased adhesiveness is a result of the modification of the protein material with the phthalic anhydride.

Although both of the prior art processes described above provide a modified protein material having improved rheological properties, it would be desirable to provide a process giving a similarly improved material but which is easier and more convenient to carry out than are those of the prior art. We have now discovered a process which enables these desiderata to be achieved but which surprisingly gives a product having even better rheological and paper-coating properties.

Accordingly, the present invention consists in a process for producing a modified protein adhesive binder by treating an alkaline solution or dispersion of a protein material having reactive disulphide bonds with a reducing agent to reduce said material, and then reacting the treated solution or dispersion either directly or after a limited hydrolysis with a carboxylic acid anhydride.

Modification of the protein material by the process of the invention provides a number of unexpected improvements in the properties of paper-coating compositions prepared using the modified protein material as an adhesive binder. Although improvements in pick strength, gloss and water-holding properties when latex is used in the coating are achieved, the most surprising improvement is the ink receptivity of the coating. Typically, the use of most hydrolysed proteins as binders results in coatings having a relatively porous surface and, when ink is applied in a printing operation, it penetrates this surface. The printing will, therefore, have a relatively flat, unglossy appearance. On the contrary, the ink receptivity of coatings prepared using the modified protein material of the invention as a binder is unusual, particularly when the protein material has been maintained in a substantially unhydrolysed condition prior to and/or during modification of the protein. The coatings are ink-receptive but are much less porous, with the result that the ink stands up more on the surface of the coating, providing a glossy and desirable appearance for the printing. Coatings prepared from the modified protein material of the invention are, therefore, especially useful for printing papers for high quality publications.

The reason why the rheological properties of alkaline dispersions or of coating compositions containing a protein material modified by the process of the invention can be improved in this way is not understood, but it is believed to be due to the combination of a treatment step in which a reducing agent reacts with the disulphide bonds of the protein, coupled with the preferred absence of any substantial degree of hydrolysis of the protein. This effect appears to be contrary to the findings of the prior art, where it was considered necessary to effect substantial hydrolysis of the protein, to hydrolyse the protein beyond the gel stage, perhaps for a period of from 4 to 6 hours, in order to achieve the desired characteristics for use in paper-coating compositions. Eliminating the need for extended hydrolysis of the protein material greatly simplifies the process whilst providing a material which is suitable as an adhesive binder giving paper-coating compositions of improved properties.

The protein material employed in the process of the invention is preferably a vegetable protein material and is more preferably a material derived from one of the oil seeds, such as cotton seeds, sesame seeds, peanuts, sunflower seeds, soybeans, palm seeds or rape seeds. The origin of the material used in the process of the invention will depend largely upon availability and price of the various seeds at the relevant time. Currently, protein materials derived from soybeans are readily and economically available and are thus preferred for use in the process of the invention. The protein material is preferably an isolated protein and most preferably a soy isolate. Accordingly, the process of the invention will hereafter be described primarily in terms of the use of soy protein materials and particularly soy isolates, although it will be appreciated that the details given in respect of the use of soy protein materials also apply mutatis mutandis to the use of other protein, particularly vegetable protein and preferably oil seed protein, materials.

A soy protein isolate is preferably prepared by treating defatted soybean flakes with an alkaline solution to solubilise the protein, thus giving a solution or dispersion of the protein. This solution or dispersion is removed from alkali-insoluble solids by filtration or centrifugation. The resulting solution or dispersion, which may contain the protein in globular form, will typically have a pH value of from 9.5 to 12, more preferably from 10 to 11.2 and this solution or dispersion may itself be used as the starting material for the process of the present invention. Alternatively, a dried soy protein isolate, which has previously been isolated from soy flakes, may be used as the starting material by forming an alkaline dispersion thereof prior to carrying out the process of the invention.

The particular type of alkaline material used to disperse the protein is not critical to the process of the invention and, in fact, any type of alkali may be used. We generally find it most convenient to use an alkali metal hydroxide, an alkaline earth metal hydroxide or ammonium hydroxide, but this list of materials is not exhaustive of the alkaline materials which can be used in the invention.

After formation of the alkaline protein dispersion or solution, however this has been achieved, it is treated with a reducing agent and it is important that this should be completed prior to reaction with the carboxylic acid anhydride. This treatment step is important, in that the reduction, together with modification by reaction with the carboxylic acid anhydride results in a modified protein material having unusual rheological characteristics when employed as an adhesive binder in a pigment-containing coating composition. The purpose of the reducing agent is to react with disulphide bonds in the solubilised protein material, reducing the disulphide bonds and thus improving the reactivity of the protein material during treatment with the carboxylic acid anhydride. This reduction of the alkaline dispersion or solution effectively reduces or altogether avoids the need for substantial hydrolysis of the protein material in order to achieve useful characteristics in coating compositions.

The particular type of reducing agent employed in the process of the invention is not critical, although we prefer to employ a compound having free or available sulphhydryl groups, such as thioglycolic acid or salts of thioglycolic acid (most preferably ammonium thioglycolate) or mercaptoethanol, thioglycolic acid and salts thereof, particularly ammonium thioglycolate, being most preferred. However, other suitable reducing agents include such materials as sulphur dioxide, sodium sulphide and sodium thiosulphate, amongst a variety of sulphur-containing reducing agents.

Since the function of the reducing agent is to reduce disulphide bonds in the protein, the amount of reducing agent is preferably at least stoichiometric relative to the level of disulphide bonds or sulphur-containing amino acids in the solubilised protein dispersion or solution although, at the least, the amount should be sufficient to modify the disulphide bonds and improve the reactivity of the thus-treated protein material during its reaction with the carboxylic anhydride. Compounds with free or available sulphhydryl groups, such as thioglycolic acid and its salts, are accordingly particularly preferred as the reducing agent, since relatively low amounts of these compounds may be employed to reduce the disulphide bonds. The precise amount of reducing agent added will therefore depend upon the level of disulphide bonds in the protein material and thus on the particular of the protein material employed, the amount preferably being stoichiometric with respect to this level.

In general, however, preferred levels of reducing agents such as thioglycolic acid or salts thereof, particularly ammonium thioglycolate, are from 0.2 to 2%, more preferably from 1 to 1.5%, by weight of the dispersed protein or the protein level in the extract.

After the alkaline protein solution or dispersion has been treated with a reducing agent, it is preferably maintained in a substantially unhydrolysed condition, or it may be hydrolysed, albeit to a very limited extent. When we refer herein to maintenance of the protein in a substantially unhydrolysed condition, we mean that there has been no significant reduction in the individual sub-unit molecular weight of the protein material. For example, hydrolysis at a pH of 10-12.5 and a temperature of 130-145°F (54-63°C) for 30 minutes or less does not result in any significant reduction in the individual sub-unit molecular weight of the protein material and limited hydrolysis on this type of scale may be desirable in order to improve the viscosity of the coating composition. In general, however, we prefer that hydrolysis should be avoided or that the degree of hydrolysis should be limited and certainly hydrolysis should not be carried out past the gel stage as is the case in the prior art and it is, indeed, unique to the present invention that desirable rheological characteristics can be achieved without any substantial hydrolysis.

Accordingly, after the protein material has been reacted with the reducing agent, the resulting treated material is either directly reacted with a carboxylic acid anhydride or is first subjected to limited hydrolysis and then reacted with the anhydride. Although any carboxylic acid anhydride or any mixture of two or more such anhydrides may be employed in the process of the invention, we prefer to employ a dicarboxylic acid anhydride, such as phthalic anhydride or succinic anhydride.

The manner in which the carboxylic acid anhydride is added to the treated protein dispersion or solution is not critical and any convenient method of addition can be employed. For example, it can be added in finely divided or ground form or in solution in a solvent that does not react with any of the constituents of the reaction mixture. The exact amount of carboxylic acid anhydride used is likewise not critical and it is difficult to give a general guide, as the amount added may vary with the nature of the protein material. The amount should be sufficient to modify the protein material and to impart the desired rheological characteristics to the material when it is used as an adhesive binder in a pigment-containing coating composition. These improved characteristics include improved pick strength, gloss, ink hold-out and water-holding characteristics, as well as a higher or better binding power with latex, which is also considered to be an important, and sometimes essential, ingredient of pigment-containing coating compositions. Broadly speaking, however, the preferred amount of carboxylic acid anhydride is at least 5% by weight, based on the weight of the protein in the dispersion and is more preferably from 7.5 to 10% by weight on this basis.

It is also desirable that the pH should be maintained at a value of at least 8 and preferably from 9 to 10.5, in order to maintain the reactivity of the amine groups, which are the parts of the protein molecule which are modified by reaction with the carboxylic acid anhydride. The exact temperature and time employed for this reaction are likewise not critical, although both obviously affect the extent of reaction and longer reaction times are required at low temperatures, whereas shorter reaction times are required when higher temperatures are employed. The temperature at which this reaction is carried out is limited only by the fact that too high a temperature may degrade the protein and/or affect the coating characteristics of the protein. Accordingly, we prefer that the temperature of the reaction should not exceed 200°F (93°C), and more preferably should not exceed 150°F (66°C).

After reaction of the protein material with the carboxylic acid anhydride, the modified material can be isolated by acid precipitation at the isoelectric point, which is usually at a pH value of from 3.7 to 4.2. After precipitation, the material may be recovered, washed, filtered, pressed or otherwise dewatered and then dried. This provides a product with suitable shelf stability, so that it may conveniently be incorporated into coating compositions.

The invention is further illustrated by the following non-limiting examples.

## EXAMPLE 1

200 pounds (90 kg) of solvent-extracted soybean flakes were extracted with 1 800 pounds (816 kg) of water, to which had been added 2.5% by weight (based on the soy flakes) of calcium hydroxide. The soybean flakes were extracted with the alkaline solution for 30 minutes to solubilise the protein, after which the alkali-insoluble solids were removed by centrifugation. These alkali-insoluble solids were then re-extracted with a further 1 000 pounds (454 kg) of water, which had been preheated to a temperature of 105°F (31°C), in order to solubilise additional protein from the extracted flakes. Following extraction, the insoluble solids or extracted flakes were again removed from the extract by centrifugation. The two alkali protein extracts were combined, giving a dispersion having a protein content of 3.0% by weight and a pH of 10.7.

The combined extracts were then reacted with 1.0% (based on the weight of the protein content) of ammonium thioglycolate, which was stirred with the alkaline extract for 5-10 minutes. The treated extract was then reacted with 7.0% (based on the weight of the protein) of phthalic anhydride. The reaction with phthalic anhydride was carried out for 30 minutes at a temperature of 130°F (54°C) and at a pH value of 9.8.

After reaction with phthalic anhydride, the reaction mixture was acidified by the addition of sufficient sulphuric acid to reduce the pH to a value of about 4 and thus to precipitate the modified protein material at its isoelectric point. The precipitated modified protein was then concentrated by centrifugation and dried at a temperature of 150-160°F (66-71°C) for 1-2 hours, to yield a substantially unhydrolysed and modified protein adhesive binder.

## EXAMPLE 2

300 pounds (136 kg) of solvent-extracted soybean flakes were extracted with 2 700 pounds (1 225 kg) of water, which had been preheated to a temperature of 105°F (41°C) and to which had been added 2.5% (based on the weight of the soy flakes) of calcium hydroxide. The flakes were extracted for 30 minutes, after which the insoluble solids were removed by centrifugation. These insoluble solids were then re-extracted with a further 1 500 pounds (680 kg) of water preheated to a temperature of 105°F (41°C), and the insoluble solids were then immediately removed by centrifugation. The two extracts or dispersions were then combined, to provide an alkaline protein dispersion having a protein content of 2.95% by weight and a pH value of 10.6. The combined dispersion was then reacted with 0.5% (based on the weight of protein) of ammonium thioglycolate, and the mixture was stirred for a further 2-3 minutes. Following this, 9% (based on the weight of the protein) of sodium hydroxide were added to the treated dispersion, which was then heated at a temperature of 145°F (63°C) for about 30 minutes. This hydrolysed the soy protein to a very limited extent. The partial hydrolysis was arrested by the addition of sulphuric acid after 30 minutes, to adjust the pH to a value of 10.5.

Following this hydrolysis, an additional 1% by weight (based on the protein) of ammonium thioglycolate was added and then the partially hydrolysed (albeit substantially unhydrolysed) dispersion was then reacted with 7.5% (based on the weight of protein) of phthalic anhydride at a temperature of 145°F (63°C), for a period of about 30 minutes at a pH value of 9.8.

After the reaction with phthalic anhydride, the reaction mixture was acidified to a pH value of about 4 by the addition of sulphuric acid, to precipitate the modified, partially hydrolysed protein at its isoelectric point. The precipitated modified protein was then concentrated by centrifugation and dried at 150-160°F (66-71°C) for 1-2 hours, to give a partially hydrolysed modified protein adhesive binder.

## EXAMPLE 3

In this example, the modified protein binders produced in Examples 1 and 2 were evaluated for their performance as adhesive binders in two different types of pigment-containing coating compositions.

The same tests were carried out on a modified binder which had been prepared in a substantially identical manner but in which substantial hydrolysis had been carried out. Specifically, the binder was prepared generally in accordance with the procedure described in Example 2, but hydrolysis was carried out in the presence of 9% by weight of the protein of sodium hydroxide at a temperature of 140°F (60°C) for 90 minutes, rather than 30 minutes in Example 2. This was sufficient to cause substantial hydrolysis of the protein. This substantially hydrolysed modified protein is identified as "Control 1".

Another protein adhesive binder, which is a hydrolysed but unmodified soy protein isolate was also used for comparison and is identified as "Control 2".

Paper-coating compositions containing the various protein materials under test were prepared using the protein material as the only binder. Each composition was prepared by mixing 15 parts of the protein material with 100 parts of clay to the total solids level indicated in Table 1 - this coating was identified as "Coating A".

A second coating composition was prepared by mixing 5 parts of the protein material with 10 parts of a styrene-butadiene latex and 100 parts of clay to the total solids level indicated in Table 1. This coating is identified as "Coating B".

Table 1 gives the coating viscosity (cps) of each of these compositions.

## TABLE 1

| Protein Material of | Solids Content (%) | RVT Speed (rpm) | | | |
|---|---|---|---|---|---|
| | | 10 | 20 | 50 | 100 |
| Example 1 (Coating A) (Coating B) | 38 47.4 | 10,000 5,600 | 5,600 3,300 | 2,760 1,680 | 1,640 1,028 |
| Example 2 (Coating A) (Coating B) | 47.4 47.4 | 8,200 500 | 4,950 350 | 2,760 228 | 1,790 190 |
| Control 1 (Coating A) (Coating B) | 47.4 47.4 | 2,700 210 | 1,500 200 | 660 128 | 475 114 |
| Control 2 (Coating A) (Coating B) | 47.4 47.4 | 5,400 980 | 3,350 610 | 1,940 344 | 1,250 249 |

6

It can be seen that coatings containing the modified but substantially unhydrolysed protein material of the present invention as the only binder had a relatively high viscosity although, when the latex was included, the viscosity was substantially reduced. Moreover, the unhydrolysed modified protein material of the invention was very compatible with latex and more comparable to the hydrolysed modified or unmodified control sample as a coating binder composition.

In further tests, the various coating compositions were applied to paper with a draw down bar in an amount of about 14-15 g of coating per square metre of paper. The coated paper was evaluated for gloss by Method T-452, a standard method of the Technical Association of Pulp and Paper Industries. The IGT value for each coating was also measured - this is the force that the coating will withstand with certain types of ink used in printing. The ink receptivity was measured by the percentage drop for K & N ink - the smaller the number, the more non-porous is the coating and therefore the less is the penetration of the ink into the coating. The results of these tests are shown in Table 2.

## TABLE 2

| Protein Material of | Opacity % | 75° Gloss % (Calendered 3 nips) | Brightness % |
|---|---|---|---|
| Example 1 (Coating A) (Coating B) | 91.8 91.6 | 50.8 68.9 | 76.3 76.1 |
| Example 2 (Coating A) (Coating B) | 91.2 91.0 | 64.0 77.9 | 75.3 76.1 |
| Control 1 (Coating A) (Coating B) | 91.4 90.9 | 66.0 78.0 | 75.9 75.6 |
| Control 2 (Coating A) (Coating B) | 91.6 91.6 | 65.3 77.4 | 75.4 76.2 |

## TABLE 2 (cont.)

| K&N Ink<br><br>% drop | IGT<br><br>M Speed<br>5 Ink | 50 KG<br><br>(cm/sec)<br>6 Ink |
|---|---|---|
| 7.95<br>5.65 | 173<br>201 | 134<br>178 |
| 12.0<br>8.6 | 161<br>185 | 145<br>170 |
| 29.2<br>13.6 | 134<br>223 | –<br>164 |
| 23.2<br>18.6 | 200<br>210 | –<br>– |

The above results indicate that the modified protein materials of the present invention function well as adhesive binders in pigment-containing coatings for paper, particularly when they are used in conjunction with a latex.

The ink hold-out or ink receptivity values are very unusual. The modified protein materials of Examples 1 and 2 have very low values, representing very little ink penetration into the coating. However, as the protein material was more completely hydrolysed, the ink penetration increased. Furthermore, when a conventional hydrolysed but unmodified protein material was used as the adhesive binder, a very high ink penetration was also observed. It is therefore apparent that the modified protein material of the invention represents a distinct improvement over the prior art in the production of modified protein materials as adhesive binders for pigment-containing coating compositions or paper.

**Claims**

EP 0 108 649 B1

1. A process for producing a modified protein adhesive binder by treating an alkaline solution or dispersion of a protein material having reactive disulphide bonds with a reducing agent to reduce said material, and then reacting the treated solution or dispersion either directly or after a limited hydrolysis with a carboxylic acid anhydride.

2. A process according to Claim 1, in which said alkaline dispersion has a pH value of from 9.5 to 12.0.

3. A process according to Claim 2, in which said pH value is from 10 to 11.2.

4. A process according to any one of the preceding Claims, in which said alkaline dispersion has a proteinaceous solids content not greater than 14% by weight.

5. A process according to any one of the preceding Claims, in which said reducing agent is a compound having free sulphhydryl groups.

6. A process according to Claim 5, in which said reducing agent is thioglycolic acid or a salt thereof.

7. A process according to Claim 6, in which said reducing agent is ammonium thioglycolate.

8. A process according to any one of Claims 1 to 4, in which said reducing agent is sulphur dioxide, sodium sulphide, sodium thiosulphate or mercaptoethanol.

9. A process according to any one of the preceding Claims, in which said reducing agent is employed in an amount which is at least stoichiometric with respect to the disulphide bonds in the protein material.

10. A process according to any one of the preceding Claims, in which said reducing agent is employed in an amount of from 0.5 to 2.0% by weight of the protein material.

11. A process according to Claim 10, in which said amount of reducing agent is from 1 to 1.5% by weight.

12. A process according to any one of the preceding Claims, in which the carboxylic acid anhydride is a dicarboxylic acid anhydride.

13. A process according to Claim 12, in which said dicarboxylic acid anhydride is phthalic anhydride or succinic anhydride.

14. A process according to any one of the preceding Claims, in which said reaction with said carboxylic acid anhydride is effected at a pH value of at least 8.

15. A process according to Claim 14, in which said pH value is from 9 to 10.5.

16. A process according to any one of the preceding Claims, in which said carboxylic acid anhydride is employed in an amount of at least 5% by weight, based on the weight of the protein material.

17. A process according to Claim 16, in which said amount of protein material is from 7.5 to 10% by weight.

18. A process according to any one of the preceding Claims, in which the pH of the dispersion is subsequently adjusted to the isoelectric point to precipitate the modified protein material.

19. A process according to Claim 18, in which the precipitated protein material is dewatered.

20. A process according to any one of the preceding Claims, in which the treated dispersion is subjected to limited hydrolysis prior to reaction with said anhydride.

21. A process according to any one of Claims 1 to 19, in which the protein material is substantially unhydrolysed.

10

**22.** A process according to any one of the preceding Claims, in which said protein material is a soy protein material.

**23.** A process according to Claim 22, in which said vegetable protein material is derived from an oil seed.

**24.** A process according to Claim 23, in which said protein material is a soy protein material.

**25.** A process according to Claim 24, in which said soy protein material is a soy protein isolate.

**Revendications**

**1.** Un procédé pour la préparation d'un liant adhésif protéinique par le traitement d'une solution ou d'une dispersion alcaline d'une substance protéinique ayant des liaisons di-sulfure réactives avec un agent réducteur pour réduire ladite substance et la réaction subséquente de la solution ou dispersion traitée, soit directement soit après une hydrolyse limitée, avec un anhydride d'acide carboxylique.

**2.** Un procédé suivant le revendication 1, dans lequel ladite dispersion alcaline a une valeur de Ph de 9,5 à 12,0.

**3.** Un procédé suivant la revendication 2, dans lequel ladite valeur de Ph est de 10 à 11,2.

**4.** Un procédé suivant l'une quelconque des revendication précédentes, dans lequel ladite dispersion alcaline a une teneur en matières protéiniques solides qui n'est pas supérieure à 14 % en poids.

**5.** Un procédé suivant l'une quelconque des revendication précédentes, dans lequel l'agent réducteur est un composé ayant des groupements sulfhydryles libres.

**6.** Un procédé suivant la revendication 5, dans lequel l'agent réducteur est l'acide thioglycolique ou un de ses sels.

**7.** Un procédé suivant la revendication 6, dans lequel l'agent réducteur est le thioglycolate d'ammonium.

**8.** Un procédé suivant l'une quelconque des revendications 1 à 4, dans lequel l'agent réducteur est l'anhydride sulfureux, le sulfure de sodium, le thiosulfate de sodium ou le mercaptoéthanol.

**9.** Un procédé suivant l'une quelconque des revendications précédentes, dans lequel l'agent réducteur est employé en une quantité qui est au moins stoechiométrique par rapport aux liaisons disulfure dans la substance protéinique.

**10.** Un procédé suivant l'une quelconque des revendications précédentes, dans lequel ledit agent réducteur est employé en une quantité allant de 0,5 à 2,0 % en poids de la substance protéinique.

**11.** Un procédé suivant la revendication 10, dans lequel ladite quantité d'agent réducteur est de 1 à 1,5 % en poids.

**12.** Un procédé suivant l'une quelconque des revendications précédentes, dans lequel l'anhydride d'acide carboxylique est un anhydride d'acide di-carboxylique.

**13.** Un procédé suivant la revendication 12, dans lequel ledit anhydride d'acide di-carboxylique est l'anhydride phtalique ou l'anhydride succinique.

**14.** Un procédé suivant l'une quelconque des revendications précédentes, dans lequel ladite réaction avec ledit anhydride d'acide carboxylique est effectuée à une valeur pH d'au moins 8.

**15.** Un procédé suivant la revendication 14, dans lequel ladite valeur pH est de 9 à 10,5.

**16.** Un procédé suivant l'une quelconque des revendications précédentes, dans lequel ledit anhydride d'acide carboxylique est employé en une quantité d'au moins 5 % en poids sur la base du poids de la substance protéinique.

**17.** Un procédé suivant la revendication 16, dans lequel ladite quantité de matière protéinique est de 7,5 à 10% en poids.

**18.** Un procédé suivant l'une quelconque des revendications précédentes, dans lequel le pH de la dispersion est ensuite ajusté au point isoélectrique pour précipiter la substance protéinique modifiée.

**19.** Un procédé suivant la revendication 18, dans lequel la substance protéinique précipitée est asséchée.

**20.** Un procédé suivant l'une quelconque des revendications précédentes, dans lequel la dispersion traitée est soumise à une hydrolyse limitée avant la réaction avec ledit anhydride.

**21.** Un procédé suivant l'une quelconque des revendications 1 à 19, dans lequel la substance protéinique est substantiellement non-hydrolysée.

**22.** Un procédé suivant l'une quelconque des revendications précédentes, dans lequel ladite substance protéinique est une substance protéinique du soja.

**23.** Un procédé suivant la revendication 22, dans lequel ladite substance protéinique végétale est dérivée d'une graine huileuse.

**24.** Un procédé suivant la revendication 23, dans lequel ladite substance protéinique est une substance protéinique de soja.

**25.** Un procédé suivant la revendication 24, dans lequel ladite substance protéinique de soja est un isolat de protéine de soja.

## Patentansprüche

**1.** Verfahren zur Herstellung eines modifizierten Protein-Klebemittels durch Behandlung einer alkalischen Lösung oder Dispersion eines Protein-Materials, das reaktive Disulfidbindungen hat, mit einem reduzierenden Agens, um das Protein-Material zu reduzieren, und anschließende Reaktion der behandelten Lösung oder Dispersion entweder direkt oder nach begrenzter Hydrolyse mit einem Carbonsäureanhydrid.

**2.** Verfahren nach Anspruch 1, bei dem die alkalische Lösung oder Dispersion einen pH-Wert im Bereich von 9,5 bis 12,0 hat.

**3.** Verfahren nach Anspruch 2, bei dem der pH-Wert im Bereich von 10 bis 11,2 liegt.

**4.** Verfahren nach einem der vorangehenden Ansprüche, bei dem die alkalische Dispersion einen Gehalt an proteinartigen Feststoffen von nicht mehr als 14 Gew.-% aufweist.

**5.** Verfahren nach einem der vorangehenden Ansprüche, bei dem das reduzierende Agens eine Verbindung mit freien Hydrogensulfidgruppen ist.

**6.** Verfahren nach Anspruch 5, bei dem das reduzierende Agens Thioglykolsäure oder ein Salz der Thioglykolsäure ist.

**7.** Verfahren nach Anspruch 6, bei dem das reduzierende Agens Ammoniumthioglykolat ist.

**8.** Verfahren nach einem der Ansprüche 1 bis 4, bei dem das reduzierende Agens Schwefeldioxid, Natriumsulfid, Natriumthiosulfat oder Mercaptoethanol ist.

**9.** Verfahren nach einem der vorangehenden Ansprüche, bei dem das reduzierende Agens in einer Menge verwendet wird, die mindestens stöchiometrisch bezüglich der Disulfidbindungen im Protein-Material ist.

**10.** Verfahren nach einem der vorangehenden Ansprüche, bei dem das reduzierende Agens in einer Menge von 0,5 bis 2,0 Gew.-%, bezogen auf das Protein-Material, verwendet wird.

**11.** Verfahren nach Anspruch 10, bei dem die Menge an reduzierendem Agens 1 bis 1,5 Gew.-% beträgt.

**12.** Verfahren nach einem der vorangehenden Ansprüche, bei dem das Carbonsäureanhydrid ein Dicarbonsäureanhydrid ist.

**13.** Verfahren nach Anspruch 12, bei dem das Dicarbonsäureanhydrid Phthalsäureanhydrid oder Bernsteinsäureanhydrid ist.

**14.** Verfahren nach einem der vorangehenden Ansprüche, bei dem die Reaktion mit Carbonsäureanhydrid bei einem pH-Wert von mindestens 8 durchgeführt wird.

**15.** Vefahren nach Anspruch 14, bei dem der pH-Wert im Bereich von 9 bis 10,5 liegt.

**16.** Verfahren nach einem der vorangehenden Ansprüche, bei dem Carbonsäureanhydrid in einer Menge von mindestens 5 Gew.-% , bezogen auf das Protein-Material, verwendet wird.

**17.** Verfahren nach Anspruch 16, bei dem die Menge an Carbonsäureanhydrid im Bereich von 7,5 bis 10 Gew.-% liegt.

**18.** Verfahren nach einem der vorangehenden Ansprüche, bei dem der pH-Wert der Dispersion anschließend auf den isoelektrischen Punkt eingestellt wird, um das modifizierte Protein-Material auszufällen.

**19.** Verfahren nach Anspruch 18, bei dem das ausgefällte Protein-Material entwässert wird.

**20.** Verfahren nach einem der vorangehenden Ansprüche, bei dem die behandelte Lösung oder Dispersion vor der Reaktion mit dem Anhydrid einer begrenzten (partiellen) Hydrolyse unterworfen wird.

**21.** Verfahren nach einem Ansprüche 1 bis 19, bei dem das Protein-Material im wesentlichen unhydrolysiert ist.

**22.** Verfahren nach einem der vorangehenden Ansprüche, bei dem das Protein-Material ein pflanzliches Protein-Material ist.

**23.** Verfahren nach Anspruch 22, bei dem das pflanzliche Protein-Material von einer Ölfrucht stammt.

**24.** Verfahren nach Anspruch 23, bei dem das Protein-Material ein Sojaprotein-Material ist.

**25.** Verfahren nach Anspruch 24, bei dem das Sojaprotein-Material ein Sojaprotein-Isolat ist.

13